# EUROPEAN PATENT APPLICATION

(11) **EP 4 725 583 A1**
(43) Date of publication of application: **15.04.2026**
(21) Application number: 25202819.6
(22) Date of filing: 17.09.2025
(51) Int. Cl.: B01D 45/02, B01D 45/04, B01D 46/00, B01D 50/20, B01D 53/26, H01M 8/04119

(54) **OVERHEAD LID FOR GAS-LIQUID SEPARATOR DEVICE, GAS-LIQUID SEPARATOR SYSTEM, AND METHOD FOR PRODUCING THE SAME**

(30) Priority: 11.10.2024 DE 102024129379
(71) Applicant: AIRBUS Operations GmbH, 21129 Hamburg (DE)
(72) Inventor: Soukup, Nikolaus, 21129 Hamburg (DE); Neubacher, Lena, 21129 Hamburg (DE)
(74) Representative: Airbus Germany

(57) **Abstract**

The invention relates to an overhead lid (34) for a gas-liquid separator device (18), the separator device (18) comprising a separation area (20) for separating a liquid (12) from a fluid (14) comprising a gas (16) flowing from a separator inlet (22) of the separator device (18) to a separator outlet (24) of the separator device (18), and a reservoir component (26) for collecting the liquid (12) from the separation area (20), the overhead lid (34) being configured for mounting on the gas-liquid separator device (18) and including a cavity area (36) for collecting the liquid (12) from the separation area (20) opposite to the reservoir component (26).

## Description

The invention relates to an overhead lid for a gas-liquid separator device. The invention further relates to a gas-liquid separator system, a fuel cell device, a vehicle, and a method for producing a gas-liquid separator system.

The technical field of the invention may be a PEM fuel cell system, comprising an air system, a fuel system, a cooling system, and an electrical system. The invention may be within the fuel or the air system in an ambient where liquid water is separated in a water separator. This water separator usually has a reservoir that contains a defined amount of water, depending in the operational point and design, this could be few milliliters, or even 400 ml. The invention is tackling the challenge that during a flight, negative g could cause the water to spill out of the water separator and leave the water separator, damaging parts downstream of it.

In this technical field, cyclone or labyrinth water separators are usually used to separate liquid water from a gas phase to increase performance and reduce risk of damage to components such as a fuel cell stack or a recirculation device downstream. These types of water separators are used because of their low pressure loss. Some water separators are operated with a reservoir and a valve, to drain the collected water in periodic intervals. Other water separator have a bypass flow to get rid of the collected water.

Mesh-type water separators or coalescers are also known to be used, but usually mean a much higher pressure loss, causing lower performance of the system by requiring more electric energy for the recirculation device.

The object of the invention is to provide a gas-liquid separator system improved for use in case of negative g-events.

To achieve this object, the invention provides an overhead lid for a gas-liquid separator device according to claim 1. A gas-liquid separator system, a fuel cell device, a vehicle, and a method for producing a gas-liquid separator system are subject-matter of the parallel claim. Advantageous embodiments of the invention are subject-matter of the dependent claims.

In one aspect, the invention provides an overhead lid for a gas-liquid separator device, the separator device comprising a separation area for separating a liquid from a fluid comprising a gas flowing from a separator inlet of the separator device to a separator outlet of the separator device, and a reservoir component for collecting the liquid from the separation area, the overhead lid being configured for mounting on the gas-liquid separator device and including a cavity area for collecting the liquid from the separation area opposite to the reservoir component.

Preferably, the overhead lid further includes a lid wall element for separating the cavity area from the separation area, the lid wall element including a lid opening for inlet of liquid from the separation area to the cavity area.

Preferably, the lid opening is arranged in a region of the separator outlet.

Preferably, the lid wall element is arranged for guiding the liquid away from and/or opposite to a direction of the separator outlet.

Preferably, the lid wall element includes at least one passage for draining of liquid from the cavity area to the separation area and/or to the reservoir component, the at least one lid draining passage preferably being arranged in a region remote from the separator outlet.

Preferably, the separator device includes at least one duct element for conveying the liquid from the separator area to the reservoir component, and wherein the at least one lid draining passage is arranged for fluid connection with said duct element.

In another aspect the invention provides a gas-liquid separator system for separating a liquid from a fluid flow comprising a gas, the gas-liquid separator system including a gas-liquid separator device including a separation area for separating the liquid from the fluid flowing from a separator inlet of the separator device to a separator outlet of the separator device, and a reservoir component for collecting the liquid from the separation area, the gas-liquid separator system further including:
- a filter device for filtering the fluid and arranged at the separator outlet; and/or
- an overhead lid according to any of preceding embodiments.

Preferably, the overhead lid is mounted and/or mountable such that the cavity area is configured for collecting the liquid from the separation area due to inertial force on the liquid, while the reservoir component is configured for collecting the liquid from the separation area due to gravitational force on the liquid.

Preferably, the separation area is configured for separating the liquid from the fluid by means of gravitational and/or centrifugal force.

Preferably, the filter device is arranged inclined with respect to a direction of the separator outlet.

Preferably, the filter device is configured for allowing passage of the gas, preferably hydrogen and/or air, and is configured for blocking passage of the liquid, preferably water.

Preferably, the filter device includes a membrane and/or mesh.

Preferably, the filter device includes a plurality of pores having a size in the range from 0.01 to 0.5 µm, preferably from 0.05 to 0.4 µm, more preferably from 0.1 to 0.3 µm, even more preferably from 0.2 to 0.25 µm.

Preferably, the filter device includes a fluorocarbon-based polymer, preferably polytetrafluoroethylene.

Any feature, aspect, and/or advantage that is described herein with respect to embodiments of the gas-liquid separator system may optionally apply to embodiments of the overhead lid, and vice versa.

In another aspect, the invention provides a fuel cell device for converting chemical energy of a fuel in form of a gas into electricity, the fuel cell device including the gas-liquid separator system according to any of preceding embodiment for separating a liquid from a fluid flow comprising the gas.

Any feature, aspect, and/or advantage that is described herein with respect to embodiments of the fuel cell device may optionally apply to embodiments of the overhead lid and/or the gas-liquid separator system, and vice versa.

In another aspect, the invention provides a vehicle, preferably an aircraft, including the gas-liquid separator system and/or the fuel cell device according to any of the preceding embodiments.

Any feature, aspect, and/or advantage that is described herein with respect to embodiments of the vehicle may optionally apply to embodiments of the overhead lid, the gas-liquid separator system, and/or the fuel cell device, and vice versa.

In another aspect, the invention provides a method for producing a gas-liquid separator system for separating a liquid from a fluid flow comprising a gas, the gas-liquid separator system including a gas-liquid separator device including a separation area for separating the liquid from the fluid flowing from a separator inlet of the separator device to a separator outlet of the separator device, a reservoir component for collecting the liquid from the separation area, and a separator wall element opposite to the reservoir component, the method comprising by use of an overhead lid according to any of preceding embodiments:
a) Drilling a wall through-hole into the separator wall element in a region of the separator outlet; and
b) Mounting the overhead lid opposite to the reservoir component, such that the wall through-hole provides an inlet for liquid from the separation area to the cavity area of the overhead lid.

Preferably, the separator device includes at least one duct element for conveying the liquid from the separator area to the reservoir component, wherein step a) further comprises:
a1) Drilling at least one wall draining passage into the separator wall element, such that said wall draining passage is arranged for fluid connection of the cavity area with said duct element.

Any feature, aspect, and/or advantage that is described herein with respect to embodiments of the method may optionally apply to embodiments of the overhead lid, the gas-liquid separator system, the fuel cell device, and/or the vehicle, and vice versa.

Preferred embodiments of the invention may be summarized as follows:
A problem with conventional cyclone water separators may be that in a negative g-event, all the water in the reservoir may be moving around the water separator freely. These types of water separators are usually designed for high separation efficiency in standard boundary conditions. This means, separating the droplets into a wall film inside the water separator and then guiding this wall film into a reservoir. A negative g-event may cause significant amounts of liquid water to move upwards and be present in the gas flow as bigger droplets. The high flow velocity of up to about 30 m/s may cause these droplets to move to the outlet of the water separator, leaving the component and then entering the next component such as a fuel cell stack or a recirculation pump, where they can cause damage.

A key damage scenario may be the flooding of the anode, which could cause hydrogen starvation in the fuel cell. A hydrogen starvation event can then lead to a significant power loss of the fuel cell system.

A preferred key feature of the invention is to provide design features to a cyclone type water separator or similar, that will guide the liquid water into an overhead reservoir instead of moving out of the water separator.

An advantage of embodiments of the invention may be that a failure scenario can be mitigated by a design feature, preventing relevant amounts of the water from leaving the water separator. At the same time, the pressure loss stays at a low level.

Embodiments of the invention preferably have the following advantages, challenges, solutions, and effects:
1) no water or low amount of water leaving the separator, solution: PTFE-filter or mesh at the outlet;
2) gas flow not hindered: solution: pore size big enough for low delta pressure;
3) temperature and pressure resistance: solution: PTFE or similar material;
4) no water collection hinders the outflow of gas, solution: membrane or mesh orientation not vertical, but with inclination to guide water in the overhead compartment via the g-forces;
5) water flow into overhead reservoir during negative g-event, solution: lid designed with holes to ease flow into overhead reservoir; and/or
6) after negative g-event: water flows back into the reservoir, solution: overhead reservoir connected with grooves to allow backflow into lower reservoir.

Embodiments of the invention are now explained in more detail with reference to the accompanying drawings of which
Fig. 1 shows an embodiment of a gas-liquid separator system;
Fig. 2 shows an illustration of the gas-liquid separator system in a temporary state; and
Fig. 3 shows a further embodiment of the gas-liquid separator system.

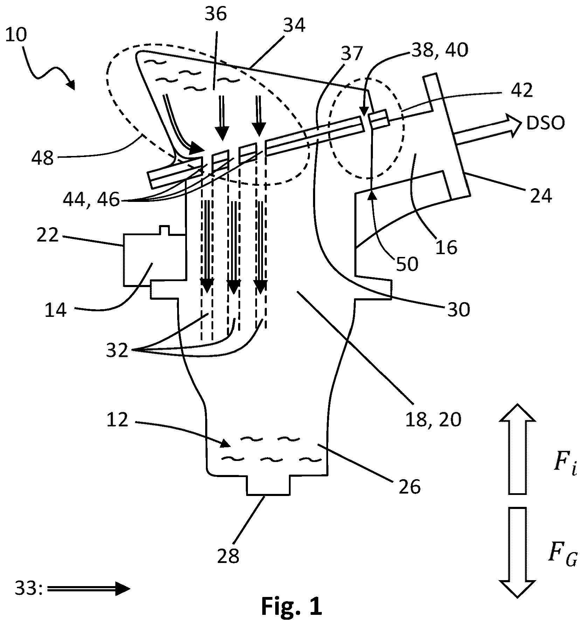

Fig. 1 shows an embodiment of a gas-liquid separator system 10. The gas-liquid separator system 10 is configured for separating a liquid 12 from a fluid flow 14 comprising a gas 16 in a standard state.

The gas-liquid separator system 10 includes a gas-liquid separator device 18. The gas-liquid separator device 18 includes a separation area 20 for separating the liquid 12 from the fluid 14 flowing from a separator inlet 22 of the separator device 18 to a separator outlet 24 of the separator device 18. The separation area 20 is configured for separating the liquid 12 from the fluid 14 by means of gravitational and/or centrifugal force.

The gas-liquid separator device 18 further includes a reservoir component 26 for collecting the liquid 12 from the separation area 20. The reservoir component 26 may include a reservoir draining device 28 for draining the liquid 12 that is collected in the reservoir component 26. The gas-liquid separator device 18 further includes a separator wall element 30.

The gas-liquid separator device 18 further includes a plurality of duct elements 32 for conveying the liquid 12 from the separator area 20 to the reservoir component 26. The duct elements 32 may be configured in form of grooves in one or more side walls 31 of the separator device 18.

In a standard state of the gas-liquid separator system 10, the liquid 12 is guided from the separation area 20 to the duct elements 32 as shown by liquid flow arrows 33 in Fig. 1. The duct elements 32 convey the liquid 12 to the reservoir component 26 due to gravitational force F_G.

An idea of the embodiments of the invention is to consider a state of the gas-liquid separator system 10 that differs from the standard state in that the separator device 18 is accelerated in a direction of the gravitational force F_G. Said different state may be considered as a temporary state.

Therefore, the gas-liquid separator system 10 further includes an overhead lid 34 mounted on the gas-separator device 18. The overhead lid 34 includes a cavity area 36 for collecting the liquid 12 from the separation area 20 opposite to the reservoir component 26 due to inertial force F_i on the liquid 12. The overhead lid 34 further includes a lid wall element 37.

In the standard state of the gas-liquid separator system 10, both, the separator wall element 30 and the lid wall element 37 are arranged for guiding the liquid 12 away from and/or opposite to a direction DSO of the separator outlet 24.

For the temporary state, the separator wall element 30 includes a wall through-hole 38 and the lid wall element 37 includes a lid opening 40, both arranged in a region 42 of the separator outlet 24. The wall through-hole 38 and the lid opening 40 fluidly correspond such that an inlet for the liquid 12 from the separation area 20 to the cavity area 36 is provided.

The separator wall element 30 further includes a plurality of wall draining passages 44 and the lid wall element 37 further includes a plurality of lid draining passages 46, both arranged in a region 48 remote from the separator outlet 24. The wall draining passages 44 and the lid draining passages 46 respectively fluidly correspond such that the liquid 12 is drained from the cavity area 36 via the duct elements 32, when the gas-liquid separator 10 switches from the temporary state to the standard state as shown by the liquid flow arrows 33.

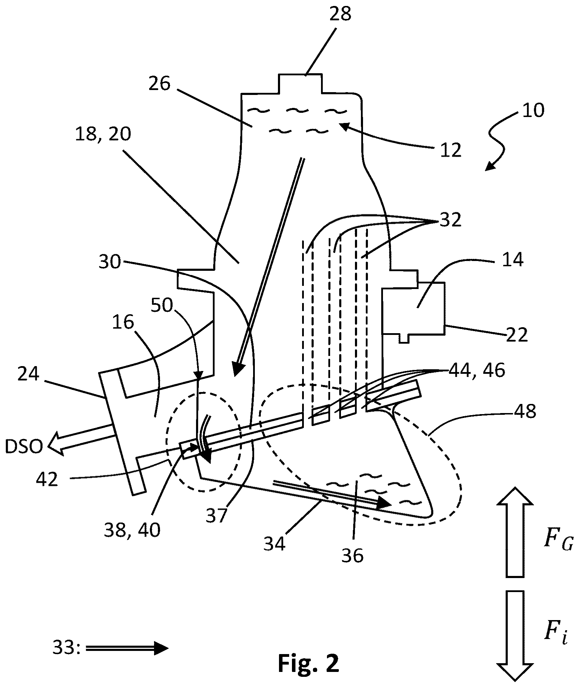

Fig. 2 shows an illustration of the gas-liquid separator system 10 in the temporary state.

The inertial force F_i acts opposite to the gravitational force F_G. In this case, the inertial force F_i directs the liquid 12 towards the wall through-hole 38 and the lid opening 40. The liquid 12 enters the cavity area 36 and is collected therein remote from the separator outlet 24.

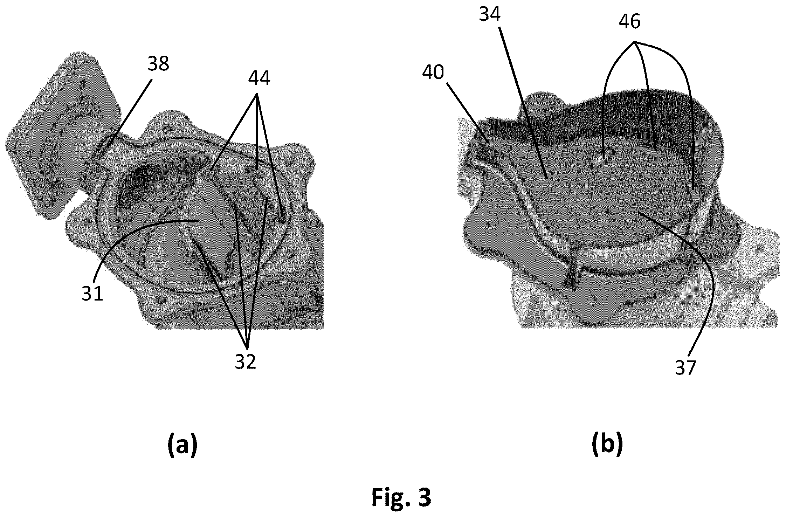

Fig. 3 (a and b) shows a further embodiment of the gas-liquid separator system 10. Fig. 3 (a) shows an embodiment of the gas-liquid separator device 18, while Fig. 3 (b) shows an embodiment of the overhead lid 34 (opened).

As can be derived from Fig. 3, the gas-liquid separator device 18 may only include either the separator wall element 30 or the lid wall element 37 for guiding the liquid 12 away from and/or opposite to a direction DSO of the separator outlet 24. Alternatively, the gas-liquid separator system 10 may include both, the gas-liquid separator 18 with the separator wall element 30 and the overhead lid 34 with the lid wall element 37.

Fig. 3 (a) further shows the wall through-hole 38 and the wall draining passages 44 of the separator wall element 30. Furthermore, the side wall 31 with duct elements 32 of the separation area 20 are shown. Fig. 3 (b) further shows the lid opening 40 and the plurality of lid draining passages 46. The wall through-hole 38 fluidly corresponds to the lid opening 40. The duct elements 32 respectively fluidly correspond to the lid draining passages 46.

Reference is made again to Fig. 1 and 2.

The gas-liquid separator device 18 further includes a filter device 50 for filtering the fluid 14. The filter device 50 is arranged at the separator outlet 24. The filter device 50 is arranged inclined with respect to the direction DSO of the separator outlet 24.

The filter device 50 may be configured for allowing passage of the gas 16 and for blocking passage of the liquid 12. The filter device 50 may be configured as a membrane and/or mesh including a plurality of pores or holes. A minimum size of the pores may be selected such that a difference between an upstream pressure and a downstream pressure with respect to the gas 16 is below a predefined pressure difference threshold. Additionally, or alternatively, a maximum size of the pores may be selected such that a permeability of the membrane and/or mesh with respect to the liquid 12 is below a predefined permeability threshold.

Embodiments further include a fuel cell device (not shown) for converting chemical energy of a fuel in form of the gas 16 into electricity, the fuel cell device including the gas-liquid separator system 10. The gas-liquid separator system 10 may be arranged upstream of the fuel cell device for separating a liquid, preferably water, from a fluid flow comprising the gas 16, preferably hydrogen. Additionally, or alternatively, the gas-liquid separator system 10 may be arranged downstream of the fuel cell device.

Embodiments further include a vehicle, preferably an aircraft, including the gas-liquid separator system 10 and/or the fuel cell device.

Embodiments further include a method for producing the gas-liquid separator system 10 for separating the liquid 12 from the fluid flow 14 comprising the gas 16, the method comprising:
a) Drilling the wall through-hole 38 into the separator wall element 30 in the region 42 of the separator outlet 24; and
b) Mounting the overhead lid 34 opposite to the reservoir component 26, such that the wall through-hole 38 provides an inlet for liquid from the separation area 20 to the cavity area 36 of the overhead lid 34.

Preferred embodiments may be summarized as follows:
Instead of a normal, closed lid, a lid may be added, that can act as an overhead reservoir. Additionally, a membrane or mesh may be installed in the outlet. Between the overhead reservoir and the lid, an intermediate ceiling may be installed with holes allowing gas and water flow into the overhead reservoir and back to the lower reservoir.

Fig. 2 shows the negative g-event: water from the reservoir will "fall down" and be guided into the overhead reservoir, with additional guide of the membrane. When the negative g-event stops.

Fig. 1 shows the back-flow of the water into the reservoir, through the holes in into the grooves. All surfaces may be designed to guide the water into the desired reservoirs, with inclinations.

The main path of the water flow in the negative g-event is depicted with the arrows. However, additional holes may be foreseen to improve the behaviour of the water flow.

In summary, the invention provides an anode water separator design avoiding negative g-operation spill over.

### List of reference signs:

- 10: gas-liquid separator system
- 12: liquid
- 14: fluid (flow)
- 16: gas
- 18: gas-liquid separator device
- 20: separation area
- 22: separator inlet
- 24: separator outlet
- 26: reservoir component
- 28: reservoir draining device
- 30: separator wall element
- 31: side wall
- 32: duct element
- 33: liquid flow arrow
- 34: overhead lid
- 36: cavity area
- 37: lid wall element
- 38: wall through-hole
- 40: lid opening
- 42: region of separator outlet
- 44: wall draining passage
- 46: lid draining passage
- 48: region remote from separator outlet
- 50: filter device

- F_G: gravitational force
- F_i: inertial force
- DSO: direction of separator outlet

## Claims

1. An overhead lid (34) for a gas-liquid separator device (18), the separator device (18) comprising a separation area (20) for separating a liquid (12) from a fluid (14) comprising a gas (16) flowing from a separator inlet (22) of the separator device (18) to a separator outlet (24) of the separator device (18), and a reservoir component (26) for collecting the liquid (12) from the separation area (20), the overhead lid (34) being configured for mounting on the gas-liquid separator device (18) and including a cavity area (36) for collecting the liquid (12) from the separation area (20) opposite to the reservoir component (26).

2. The overhead lid (34) according to claim 1, further including a lid wall element (37) for separating the cavity area (36) from the separation area (20), the lid wall element (37) including a lid opening (40) for inlet of liquid (12) from the separation area (20) to the cavity area (36).

3. The overhead lid (34) according to claim 2, wherein the lid opening (40) is arranged in a region (42) of the separator outlet (24).

4. The overhead lid (34) according to claim 2 or 3, wherein the lid wall element (37) is arranged for guiding the liquid (12) away from and/or opposite to a direction (DSO) of the separator outlet (24).

5. The overhead lid (34) according any of claims 2 to 4, wherein the lid wall element (37) includes at least one passage (46) for draining of liquid (12) from the cavity area (36) to the separation area (20) and/or to the reservoir component (26), wherein the at least one lid draining passage (46) preferably being arranged in a region (48) remote from the separator outlet (24).

6. The overhead lid (34) according to claim 5, wherein the separator device (18) includes at least one duct element (32) for conveying the liquid (12) from the separator area (20) to the reservoir component (26), and wherein the at least one lid draining passage (46) is arranged for fluid connection with said duct element (32).

7. A gas-liquid separator system (10) for separating a liquid (12) from a fluid (14) flow comprising a gas (16), the gas-liquid separator system (10) including a gas-liquid separator device (18) including a separation area (20) for separating the liquid (12) from the fluid (14) flowing from a separator inlet (22) of the separator device (18) to a separator outlet (24) of the separator device (18), and a reservoir component (26) for collecting the liquid (12) from the separation area (20), the gas-liquid separator system (10) further including:
- a filter device (50) for filtering the fluid (14) and arranged at the separator outlet (24); and/or
- an overhead lid (34) according to any of the preceding claims.

8. The gas-liquid separator system (10) according to claim 7, wherein the overhead lid (34) is mounted and/or mountable such that the cavity area (36) is configured for collecting the liquid (12) from the separation area (20) due to inertial force (F_i) on the liquid (12), while the reservoir component (26) is configured for collecting the liquid (12) from the separation area (20) due to gravitational force (F_G) on the liquid (12).

9. The gas-liquid separator system (10) according to claim 7 or 8, wherein the separation area (20) is configured for separating the liquid (12) from the fluid (14) by means of gravitational and/or centrifugal force.

10. The gas-liquid separator system (10) according to any of claims 7 to 9, wherein the filter device (50) is arranged inclined with respect to a direction (DSO) of the separator outlet (24).

11. The gas-liquid separator system (10) according to any of claims 7 to 10, wherein the filter device (50):
- is configured for allowing passage of the gas (16), preferably hydrogen and/or air, and/or is configured for blocking passage of the liquid (12), preferably water; and/or
- includes a membrane and/or mesh; and/or
- includes a plurality of pores having a size in the range from 0.01 to 0.5 µm, preferably from 0.05 to 0.4 µm, more preferably from 0.1 to 0.3 µm, even more preferably from 0.2 to 0.25 µm; and/or
- includes a fluorocarbon-based polymer, preferably polytetrafluoroethylene.

12. A fuel cell device for converting chemical energy of a fuel in form of a gas (16) into electricity, the fuel cell device including the gas-liquid separator system (10) according to any of claims 7 to 11 for separating a liquid (12) from a fluid (14) flow comprising the gas (16).

13. A vehicle, preferably an aircraft, including the gas-liquid separator system (10) according to any of claims 7 to 11 and/or the fuel cell device according to claim 12.

14. A method for producing a gas-liquid separator system (10) for separating a liquid (12) from a fluid (14) flow comprising a gas (16), the gas-liquid separator system (10) including a gas-liquid separator device (18) including a separation area (20) for separating the liquid (12) from the fluid (14) flowing from a separator inlet (22) of the separator device (18) to a separator outlet (24) of the separator device (18), a reservoir component (26) for collecting the liquid (12) from the separation area (20), and a separator wall element (30) opposite to the reservoir component (26), the method comprising by use of an overhead lid (34) according to any of claims 1 to 6:
a) Drilling a wall through-hole (38) into the separator wall element (30) in a region (42) of the separator outlet (24); and
b) Mounting the overhead lid (34) opposite to the reservoir component (26), such that the wall through-hole (38) provides an inlet for liquid (12) from the separation area (20) to the cavity area (36) of the overhead lid (34).

15. The method according to claim 14, wherein the separator device (18) includes at least one duct element (32) for conveying the liquid (12) from the separator area (20) to the reservoir component (26), wherein step a) further comprises:
a1) Drilling at least one wall draining passage (44) into the separator wall element (30), such that said wall draining passage (44) is arranged for fluid connection of the cavity area (36) with said duct element (32).
